# FASCICULE DE BREVET EUROPEEN

(11) **EP 0 306 467 B1**
(45) Date de publication et mention de la délivrance du brevet: **13.01.1993**
(21) Numéro de dépôt: 88870130.7
(22) Date de dépôt: 03.08.1988
(51) Int. Cl.: F17D 5/04, F16K 17/28, G01M 3/28

(54) **Dispositif de sectionnement automatique pour réseau de transport de fluide sous double enveloppe**
Automatische Trennvorrichtung für doppelwandige Flüssigkeitstransportnetze
Automatic cut-off device for a double-walled fluid transporting network

(30) Priorité: 03.08.1987 FR 8711007
(43) Date de publication de la demande: 08.03.1989
(73) Titulaire: Storme, Charles-André, B-1460 Ittre (BE)
(72) Inventeur: Storme, Charles-André, B-1460 Ittre (BE)
(74) Mandataire: Plucker, Guy

(56) Documents cités:
- CH-A- 382 506
- CH-A- 567 226
- DE-B- 1 295 927
- FR-A- 472 397
- FR-A- 1 474 749
- US-A- 2 645 243
- US-A- 4 030 520

## Description

L'invention concerne un dispositif de sectionnement automatique et manoeuvrable pour un réseau de distribution de fluide à double enveloppe. Elle s'applique notamment à la protection de réseaux de distribution de fluides caloporteurs et plus particulièrement de réseaux enterrés pour la distribution de fluides chauds à longue distance.

Le transport d'énergie thermique par fluide caloporteur à distance est une technique qui permet notamment de résoudre de façon élégante et économique le problème de la récupération d'énergie par incinération d'ordures ménagères, ou la rentabilisation de centrales thermiques ou industrielles ou autres sources d'énergie alternatives situées à l'écart des agglomérations.

Dans ce type de réseau de distribution, les tubes calorifugés véhiculant le fluide sont protégés par une enveloppe continue qui est souvent maintenue sous vide.

Le transport de ces fluides chauds sous double enveloppe présente, sur d'autres solutions plus classiques telles que les conduites isolées simplement posées en caniveau, un avantage appréciable du point de vue des pertes d'énergie, du respect de l'environnement et de l'absence quasi totale de dégradations des organes internes à la gaine.

En raison du niveau de performance de ces réseaux, ils doivent répondre à des critères de qualité et de fiabilité techniques accrus. En particulier, en cas d'apparition de défauts au tube caloporteur, les sollicitations thermiques peuvent être plus accentuées que celles apparaissant lors d'une simple pose en caniveau. Une fuite est généralement remarquée au tableau de contrôle de la centrale et/ou par un système de détection approprié et/ou par l'examen de la tenue au vide de l'enveloppe extérieure.

Particulièrement en cas de fuite relativement importante du tube caloporteur, il y a risque d'envahissement par le fluide de l'espace compris entre le tube caloporteur et l'enveloppe extérieure. Il pourrait en résulter une élévation de température de l'enveloppe, d'où des tensions mécaniques dues à la dilatation thermique, avec risque de dégradations importantes aux installations si celles-ci n'ont pas été étudiées et réalisées en conséquence. Les probabilités d'apparition d'une fuite, quoique minimes, ne sont jamais totalement nulles; aussi les constructeurs préfèrent-ils désormais limiter les risques imposés à l'installation et les pertes en exploitation possibles en prévoyant un sectionnement en tronçons du volume annulaire séparant le tube caloporteur et son enveloppe protectrice.

La demande de brevet français n° 2 592 937 décrit un dispositif permettant la détection et le repérage d'une fuite dans les conduites. Les dispositifs de détection décrits dans cette demande n'ont cependant pas de rôle de protection actif.

Une autre façon bien connue de limiter les dommages en cas de fuite est de réaliser un système à sectionnement de l'espace compris entre le tube caloporteur et l'enveloppe extérieure et de monter, à chaque sectionnement, une vanne motorisée pouvant être actionnée automatiquement par le signal d'un senseur inséré dans le dit espace. En cas de fuite, cette vanne motorisée interrompt la liaison entre deux tronçons successifs de cet espace annulaire, de façon à maintenir l'isolation des tronçons non affectés par la fuite et à prévenir la montée de la pression dans ces tronçons. Un tel système offre le désavantage d'être extrêmement onéreux puisqu'il est nécessaire de prévoir une vanne motorisée à chaque séparation entre deux tronçons. Ce dispositif est, en outre, sensible aux agents extérieurs, requiert de fréquents entretiens et contrôles et implique une alimentation en énergie extérieure. L'alimentation en électricité de ces vannes peut, le cas échéant, constituer une source de danger (électrocution).

On connaît, par le document CH-A-382506, un réseau de transport de fluide dans lequel les enveloppes des conduits sont divisées en tronçons étanches les uns par rapport aux autres.

Ces tronçons sont reliés, via une canalisation d'alimentation commune, à une pompe à vide, qui déssert donc tous les tronçons en parallèle.

Des dispositifs de contrôle comportant une chambre verticale sont disposés aux raccordements entre la canalisation d'alimentation et chaque partie de tronçon, les deux extrémités de la chambre étant raccordés respectivement à la canalisation et à la partie de tronçon. La différence de pression régnant entre ces deux zones déplace un organe obturateur vers le haut ou vers le bas de la chambre verticale, ce qui lui déclanche un signal électrique.

La présente invention concerne un réseau de distribution de fluide à double enveloppe comportant un sectionnement en tronçons de l'espace annulaire séparant le tube de transport de fluide et l'enveloppe extérieure, et a pour but de procurer, pour un tel réseau, un système de protection automatique et fiable, fonctionnant sans équipement électrique et empêchant, en cas de fuite, la propagation du fluide dans l'espace compris entre le tube de transport de fluide et l'enveloppe extérieure des tronçons non affectés par la fuite.

Un autre but de l'invention est d'obtenir un tel système d'un prix de revient relativement faible.

Un autre but de l'invention est que ce même dispositif puisse servir d'organe de manoeuvre permettant notamment le sectionnement volontaire lors de travaux à effectuer sur les lignes ou lors de la mise en service.

Un autre but de l'invention est d'obtenir un tel dispositif de sécurité pouvant fonctionner sans intervention humaine et sans l'apport d'une énergie extérieure.

L'objet de l'invention est un dispositif de sectionnement automatique pour réseau de transport de fluide comportant un ou plusieurs tubes de transport de fluide comportant un ou plusieurs tubes de transport de fluide enfermés dans une enveloppe protectrice extérieure, l'espace compris entre le ou les tubes de transport de fluide et la dite enveloppe étant divisé en tronçons séparés par des parois de séparation étanches. Ce dispositif comporte une chambre centrale dans laquelle peut se déplacer librement un organe obturateur et des orifices d'entrée munis de sièges aptes à coopérer avec l'organe obturateur pour réaliser une fermeture hermétique. L'organe obturateur, en l'absence de sollicitations extérieures, se positionne par gravité vers le centre de la chambre; deux conduits de pontage débouchent par une de leurs extrémités latéralement à l'opposé l'un de l'autre par des orifices d'entrée dans la chambre centrale; l'autre extrémité de chacun de ces conduits de pontage étant montée sur la dite enveloppe protectrice extérieure en débouchant respectivement dans deux tronçons voisins, de part et d'autre d'une paroi de séparation étanche. Les dimensions relatives de la chambre centrale et de l'organe obturateur sont telles que, lorsqu'une différence de pression apparaît entre les deux conduits, le flux de fluide provenant du conduit où la pression est la plus élevée provoque le déplacement de l'organe obturateur, lequel vient s'appliquer contre le siège de l'orifice communiquant avec le conduit où la pression est plus basse; un orifice d'échappement met en communication l'intérieur de la chambre centrale et l'atmosphère extérieure, le dit orifice d'échappement étant fermé en condition normale par un organe de protection contre la surpression.

Selon une forme de réalisation préférée, l'organe obturateur a une forme sphérique.

Suivant une forme de réalisation particulière de l'invention, l'organe obturateur repose sur le fond de la chambre centrale, laquelle présente une concavité telle qu'en l'absence de sollicitations extérieures, l'organe obturateur est amené par gravité vers le centre de la chambre centrale.

Suivant une autre forme de réalisation particulière, l'organe obturateur est suspendu, à la manière d'un pendule, dans la chambre centrale, de manière telle qu'en l'absence de sollicitations extérieures, il est amené par gravité vers le centre de cette chambre.

L'organe de protection contre la surpression est, de préférence, un disque de rupture.

Selon une autre forme de réalisation préférée de l'invention, celle-ci comporte un organe de manoeuvre extérieur apte à provoquer le déplacement et le maintien de l'organe obturateur dans une position prédéterminée.

Selon une forme de réalisation avantageuse de l'invention, cet organe de manoeuvre comprend deux tiges débouchant chacune dans une chambre secondaire attenant à la chambre centrale, ces deux tiges pouvant être déplacées longitudinalement selon l'axe des orifices d'entrée de la chambre centrale; des moyens d'étanchéité sont disposés entre les dites tiges et la paroi du dispositif, ces tiges étant munies de moyens de positionnement aptes à assurer leur immobilisation dans plusieurs positions prédéterminées; ces moyens de positionnement peuvent être constitués par des crans de positionnement dans lesquels s'engage un ergot solidaire de chaque tige de manoeuvre.

L'organe obturateur peut être réalisé en tout matériau approprié et notamment en aluminium, en fonte, en résine, en acier inoxydable ou en un métal recouvert de matière polymère.

Suivant une forme d'exécution particulière, la chambre centrale comporte un hublot transparent apte à permettre le repérage visuel de la position de l'organe obturateur.

Suivant une forme d'exécution avantageuse, chaque chambre secondaire comporte une tubulure munie d'un moyen de fermeture (tel qu'une petite vanne) permettant le raccordement d'un appareil de mesure de pression.

Un autre objet de l'invention est un réseau de transport de fluide comportant un ou plusieurs tubes de transport de fluide enfermés dans une enveloppe protectrice extérieure, l'espace compris entre le ou les tubes de transport de fluide et l'enveloppe étant sectionné en tronçons par des parois de séparation étanches; ce réseau comporte des dispositifs de sectionnement automatiques, chacun de ces dispositifs comportant une chambre centrale dans laquelle peut se déplacer un organe obturateur qui, en l'absence de sollicitations extérieures, se positionne par gravité vers le centre de la chambre; deux conduits de pontage débouchent par une de leurs extrémités latéralement par des orifices d'entrée à l'opposé l'un de l'autre dans la chambre centrale, l'autre extrémité de chacun de ces conduits étant montée sur ladite enveloppe protectrice extérieure en débouchant respectivement dans deux tronçons voisins de part et d'autre d'une paroi de séparation étanche; l'orifice d'entrée correspondant à chacun de ces conduits est muni d'un siège apte à coopérer avec l'organe obturateur pour réaliser une fermeture hermétique; les dimensions relatives à la chambre centrale et de l'organe obturateur sont telles que lors de l'apparition d'une différence de pression entre les deux tronçons de l'enveloppe, le flux de fluide provenant du tronçon où la pression est la plus élevée provoque le déplacement de l'organe obturateur depuis le centre de la chambre, ledit organe obturateur venant s'appliquer contre le siège ménagé sur l'orifice communiquant avec le tronçon où la pression est la plus faible.

Un orifice d'échappement met en communication l'intérieur de la chambre centrale et l'atmosphère extérieure, ledit orifice d'échappement étant fermé en condition normale par un organe de protection contre la surpression.

De façon avantageuse, ce réseau comporte des pompes aptes à alimenter en série un certain nombre de tronçons reliés par leurs dispositifs de pontage à sectionnement automatique.

De façon avantageuse, dans le réseau, l'organe obturateur des dispositifs à sectionnement automatique a une forme sphérique.

L'organe obturateur des dispositifs de pontage à sectionnement automatique du réseau repose de préférence sur le fond de leur chambre centrale, laquelle présente une concavité telle qu'en l'absence de sollicitations extérieures, l'organe obturateur est ramené par gravité vers le centre de la chambre centrale.

Suivant une autre forme d'exécution, l'organe obturateur des dispositifs de pontage à sectionnement automatique du réseau est suspendu à la manière d'un pendule dans leur chambre centrale, de manière telle qu'en l'absence de sollicitations extérieures, il est ramené par gravité vers le centre de cette chambre.

L'organe de protection contre la surpression des dispositifs de pontage à sectionnement automatique du réseau est de façon avantageuse un disque de rupture.

Les dispositifs de pontage à sectionnement automatique du réseau comportent de préférence un organe de manoeuvre extérieur, apte à déplacer et à maintenir dans une position prédéterminée l'organe obturateur.

Suivant un mode de réalisation préféré, l'organe de manoeuvre extérieur des dispositifs de pontage à sectionnement automatique du réseau comprend deux tiges débouchant dans des chambres secondaires attenant à la chambre centrale; ces tiges de manoeuvre peuvent être déplacées longitudinalement selon l'axe des orifices d'entrée de la chambre centrale, des moyens d'étanchéité étant disposés entre lesdites tiges et la paroi du dispositif, ces tiges sont munies, en outre, de moyens de positionnement aptes à assurer leur immobilisation dans une position déterminée.

L'organe obturateur des dispositifs de pontage à sectionnement automatique du réseau est fabriqué de préférence en un matériau choisi parmi le groupe comprenant : l'aluminium, la fonte, la résine, l'acier inoxydable et le métal recouvert de matériau polymère.

Dans le réseau suivant l'invention, la chambre centrale des dispositifs de pontage à sectionnement automatique comporte optionnellement un hublot transparent, apte à permettre le repérage visuel de la position de l'organe obturateur.

Suivant une forme de réalisation préférée de ce réseau, chaque chambre secondaire comporte une tubulure munie d'un moyen de fermeture, permettant le raccordement d'un appareil de mesure de pression.

D'autres particularités et avantages de l'invention ressortiront de la description qui va suivre d'une forme d'exécution particulière appliquée à un réseau de distribution de fluide caloporteur, dans lequel l'espace entre le tube caloporteur et l'enveloppe extérieure est maintenu sous vide, référence étant faite aux dessins annexés, dans lesquels :
la Fig. 1 est une vue en coupe suivant un plan vertical passant par l'axe de la conduite du dispositif de sectionnement suivant l'invention;
la Fig. 2 est une vue en coupe suivant un plan vertical passant par l'axe de la conduite du dispositif suivant l'invention après apparition d'une fuite dans un des tronçons;
la Fig. 3 est une vue en coupe suivant un plan vertical passant par l'axe de la conduite du dispositif suivant l'invention après fonctionnement du dispositif de protection contre les surpressions, et
les Fig. 4, 5 et 6 sont des vues en coupe avec interruption du dispositif de sectionnement suivant l'invention montrant les différentes manoeuvres exécutées à l'aide de ce dispositif.

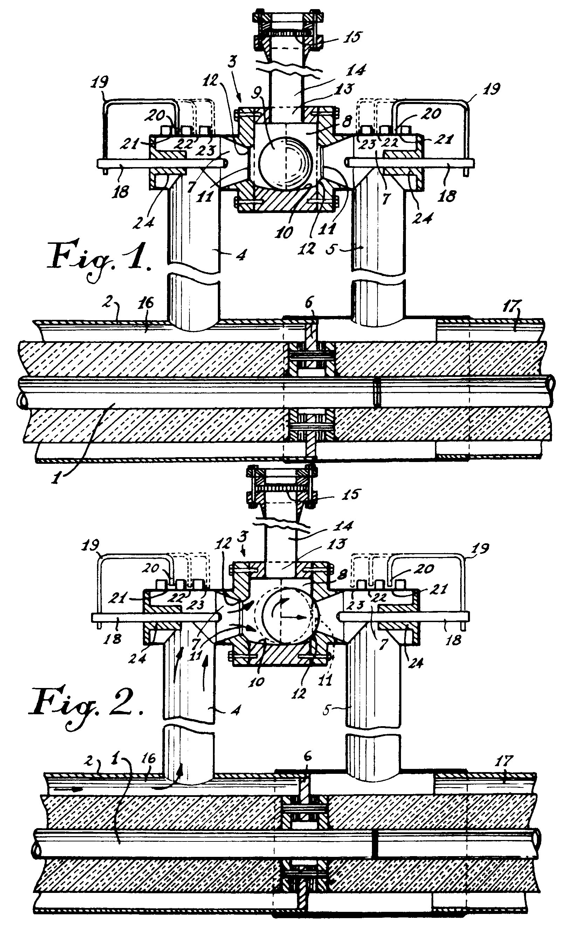

La Fig. 1 est une vue en coupe, avec interruptions, selon un plan vertical passant par l'axe des conduites du dispositif de sectionnement selon l'invention, en régime normal. La conduite est constituée d'un tube caloporteur isolé 1 maintenu radialement dans une enveloppe protectrice extérieure 2, sur laquelle est fixé le dispositif de sectionnement automatique 3. Les conduits de pontage 4 et 5 sont solidarisés par soudage à l'enveloppe protectrice extérieure 2 de part et d'autre d'un point fixe comportant une paroi de séparation étanche 6.

Chacun des conduits 4 et 5 communique via une des chambres secondaires 7 avec la chambre centrale 8 dans laquelle un organe obturateur 9 de forme sphérique peut se déplacer librement. De par la configuration du fond 10 de la chambre 8 dans les conditions normales d'emploi, l'organe obturateur 9 est ramené par son propre poids vers le milieu de la chambre centrale 8. Chaque orifice 11 par lequel la chambre centrale 8 communique avec chacune des chambres secondaires 7 est garni d'un siège 12 concentrique à l'orifice 11 et dont la forme coïncide avec celle de l'organe obturateur 9.

Un orifice d'échappement 13 s'ouvre dans la chambre centrale 8. Cet orifice d'échappement 13 se prolonge par un conduit 14 dont l'extrémité est fermée par un organe de protection contre la surpression 15, par exemple un disque de rupture.

Lorsque l'organe obturateur 9 occupe le point central de la chambre centrale 8, les deux orifices 11 sont dégagés et la pression s'équilibre entre les deux tronçons 16 et 17. Les tronçons successifs formant une conduite peuvent donc tous être maintenus sous vide ou sous une pression uniforme, en série, par un ou deux groupes de pompes (non représentés).

La Fig. 2 est une vue analogue à celle de la Fig. 1 montrant le dispositif selon l'invention lors de l'apparition d'une fuite dans le tube caloporteur 1. Une fuite s'étant produite à hauteur du tronçon défectueux 16, de la vapeur sous pression se répand dans ce tronçon, puis dans la chambre centrale 8. Il se produit entre les deux côtés de l'organe obturateur 9 une différence de pression qui déplace cet organe vers le siège 12 de l'orifice 11 correspondant au tronçon sain 17 où règne la plus basse pression.

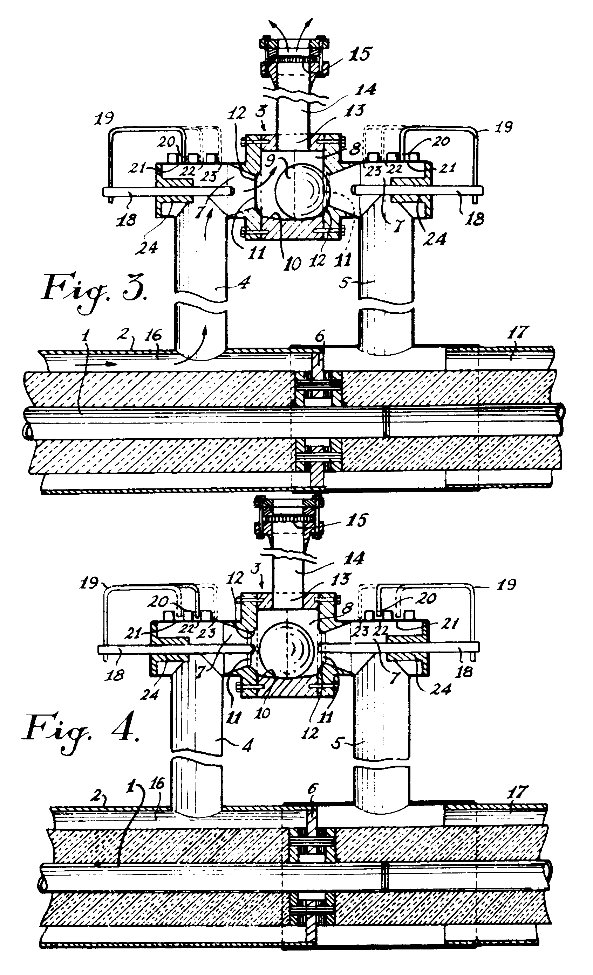

La Fig. 3 est une vue analogue à celle de la Fig. 1 montrant le dispositif selon l'invention dans le cas où, par suite de l'apparition d'une fuite dans le tube caloporteur 1 à hauteur du tronçon 16, l'organe obturateur 9 a obturé l'orifice 11 correspondant au tronçon sain 17 et où, après un temps plus ou moins long, la pression dans le tronçon défectueux s'est élevée au-delà de la valeur de calibrage du disque de rupture 15. Le disque de rupture 15 étant soumis, via la chambre centrale 8, à la pression régnant dans le tronçon défectueux 16, ce disque 15 vole en éclats, le fluide excédentaire s'échappe par le conduit 14, ce qui fait redescendre la pression dans l'enveloppe 2 du tronçon défectueux 16 au niveau de la pression atmosphérique (aux pertes de charge près). Après la rupture du disque 15, l'organe obturateur 9 reste plaqué sur le siège 12 de l'orifice 11 correspondant au tronçon 17 non affecté par la fuite, la pression régnant dans la chambre centrale (pression atmosphérique étant supérieure à celle qui règne dans le tronçon 17 (vide). Un revêtement approprié recouvrant l'organe obturateur 9 coopère avec d'éventuels moyens d'étanchéité disposés sur le siège 12 pour préserver le tronçon sain 17, non affecté par la fuite, de toute perte de vide.

Les Fig. 4, 5 et 6 sont des vues analogues à celle de la Fig. 1, montrant les différentes manoeuvres pouvant être opérées à l'aide du dispositif selon l'invention. Deux tiges de manoeuvre 18 sont munies chacune d'une poignée 19 par laquelle elles sont actionnées et d'un ergot 20 pouvant être engagé dans différents crans de positionnement 21, 22, 23 par rotation et translation, ce qui permet à l'extrémité de chaque tige de manoeuvre 18 d'agir sur l'organe obturateur 9.

Un presse-étoupe 24 (ou autre dispositif d'étanchéité) assure l'herméticité de la jonction entre cet organe 9 et la paroi de la chambre secondaire 7.

Au premier cran de positionnement 21, comme indiqué aux Fig. 1, 2 et 3, les extrémités des tiges de manoeuvre 18 sont rétractées dans les chambres secondaires 7, ce qui est la position normale en régime.

Au second cran de positionnement 22, comme indiqué à la Fig. 4, l'extrémité d'une tige 18 est amenée à hauteur du siège 12 de l'orifice 11 de façon à empêcher, par exemple lors de la mise en service ou de la remise en service d'un tronçon, la fermeture intempestive du dispositif de sectionnement 3 due à la différence de pression régnant entre deux tronçons. Cette deuxième position de la tige de manoeuvre 18 est également utilisée pour dégager l'organe obturateur 9 de son siège 12 par poussée ou par impact après un déclenchement du dispositif 3. Au troisième cran de positionnement 23, comme indiqué à la Fig. 5, la tige de manoeuvre 18 se trouve en position extrême vers l'intérieur de la chambre centrale 8, maintenant l'organe obturateur 9 plaqué contre le siège 12 correspondant à l'orifice 11 qui se trouve à l'opposé de la tige 18. Cette troisième position de l'organe de manoeuvre 18 peut être utilisée non seulement pour effectuer une coupure volontaire entre deux tronçons, mais aussi pour assurer manuellement le maintien en place de l'organe obturateur 9 en cours de travaux, après déclenchement automatique du dispositif de coupure.

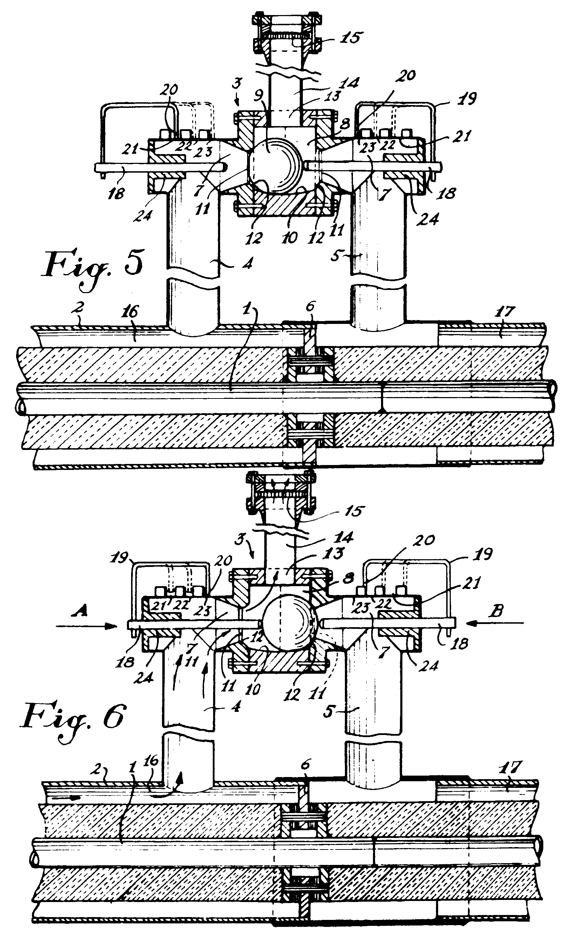

La Fig. 6 montre l'utilisation du dispositif de sectionnement 3 comme localisateur pour la détermination du tronçon défectueux 16. Les deux tiges de manoeuvre 18 sont dégagées de leurs ergots 20 et enfoncées dans la chambre centrale 8. Seule la tige 18 correspondant au tronçon défectueux 16 peut s'enfoncer jusqu'à hauteur du troisième cran 21, l'autre tige 18 vient buter contre l'organe obturateur 9; il serait nécessaire d'y appliquer une force d'environ 250 N pour dégager l'organe obturateur 9 de son siège 12.

La forme ici décrite pour l'organe de manoeuvre, en l'occurrence des tiges coulissantes, a l'avantage de permettre un positionnement rapide et précis de ces tiges et de ne pas poser de problème particulier d'étanchéité, mais il est bien évident que l'on peut utiliser d'autres organes comme des tiges filetées se déplaçant sur un siège fileté solidaire du dispositif de sectionnement.

Il va de soi également que la forme de l'organe obturateur pourrait être autre que celle d'une sphère, celle-ci présentant des avantages du point de vue du frottement notamment. On peut utiliser pour ce même organe d'autres formes telles que coniques ou cylindriques, sans pour autant s'écarter du cadre de l'invention.

Il est à noter que le dispositif suivant l'invention fonctionne également en cas de fuite de l'enveloppe extérieure 2. En effet, en cas de fuite dans l'enveloppe extérieure 2, la pression augmente dans l'espace annulaire affecté par la fuite (par l'entrée d'air depuis l'atmosphère) et le dispositif de sectionnement 3 fonctionnera comme dans le cas d'une fuite du tube caloporteur 1, isolant l'espace annulaire du tronçon affecté par la fuite de l'espace annulaire des tronçons voisins.

Le dispositif suivant l'invention offre notamment l'avantage de pouvoir être facilement remis en état de fonctionnement normal après qu'une réparation a été effectuée (suite à une fuite du tube caloporteur 1 ou de l'enveloppe extérieure 2).

Chaque dispositif suivant l'invention est installé de manière à être accessible depuis un regard fermé par un couvercle. Il est donc aisément accessible pour permettre toute injection, manoeuvre, réparation ou remplacement éventuel.

Parmi d'autres avantages de l'invention, on peut citer le fait que sa construction simple et robuste permet d'être utilisée par du personnel de faible qualification; par ailleurs les effets préjudiciables d'une fuite étant fortement limités, le personnel dispose d'un délai accru pour intervenir lors d'un incident, sans que le reste de l'installation ait à en souffrir.

## Revendications

1. Dispositif de sectionnement automatique (3) pour réseau de transport de fluide comportant un ou plusieurs tubes de transport de fluide (1), enfermés dans une enveloppe protectrice extérieure (2), l'espace compris entre le ou les tubes de transport de fluide (1) et la dite enveloppe protectrice extérieure (2) étant divisé en tronçons (16, 17) séparés par des parois de séparation étanches (6), le dit dispositif comportant une chambre centrale (8) dans laquelle peut se déplacer un organe obturateur (9) et des orifices d'entrée (11) dans cette chambre (8) munis d'un siège (12) apte à coopérer avec l'organe obturateur (9) pour réaliser une fermeture hermétique, ce dispositif étant caractérisé en ce qu'il comporte
- deux conduits de pontage (4, 5) débouchant à une de leurs extrémités latéralement, à l'opposé l'un de l'autre par les orifices d'entrée (11), dans la chambre centrale (8), l'autre extrémité de chacun de ces conduits de pontage (4, 5) étant montée sur la dite enveloppe protectrice extérieure (2) en débouchant respectivement dans deux tronçons voisins, de part et d'autre d'une paroi de séparation étanche (6),
- un orifice d'échappement (13) mettant en communication l'intérieur de la chambre centrale (8) et l'atmosphère extérieure, le dit orifice d'échappement (13) étant fermé en condition normale par un organe de protection contre la surpression (15),
- l'organe obturateur (9) se positionnant par gravité vers le centre de la chambre (8) en l'absence de sollicitations extérieures,
- les dimensions relatives de la chambre centrale (8) et de l'organe obturateur (9) étant telles que lors de l'apparition d'une différence de pression entre les deux conduits (4, 5), le flux de fluide provenant du conduit (4, 5) où la pression est la plus élevée provoque le déplacement de l'organe obturateur (9), le dit organe obturateur (9) venant s'appliquer contre le siège (12) de l'orifice (11) communiquant avec le conduit (4, 5) où la pression est la plus basse.

2. Dispositif suivant la revendication 1, caractérisé en ce que l'organe obturateur (9) a une forme sphérique.

3. Dispositif suivant l'une quelconque des revendications 1 et 2, caractérisé en ce que l'organe obturateur (9) repose sur le fond de la chambre centrale (8), laquelle présente une concavité telle qu'en l'absence de sollicitations extérieures, l'organe obturateur (9) est amené par gravité vers le centre de la chambre centrale (8).

4. Dispositif suivant l'une quelconque des revendications 1 et 2, caractérisé en ce que l'organe obturateur (9) est suspendu, à la manière d'un pendule, dans la chambre centrale (8), de manière telle qu'en l'absence de sollicitations extérieures, il est amené par gravité vers le centre de cette chambre (8).

5. Dispositif suivant, l'une quelconque des revendications précédentes caractérisé en ce que l'organe de protection contre la surpression (15) est un disque de rupture.

6. Dispositif suivant l'une quelconque des revendications précédentes, caractérisé en ce qu'il comporte un organe de manoeuvre extérieur apte à déplacer et à maintenir dans une position prédéterminée l'organe obturateur (9).

7. Dispositif suivant la revendication 6, caractérisé en ce que l'organe de manoeuvre extérieur comprend deux tiges (18) débouchant dans des chambres secondaires (7) attenant à la chambre centrale (8), les dites tiges de manoeuvre (18) pouvant être déplacées longitudinalement selon l'axe des orifices d'entrée (11) de la chambre centrale (8), des moyens d'étanchéité étant disposés entre les dites tiges (18) et la paroi du dispositif (3), les dites tiges (18) étant munies, en outre, de moyens de positionnement aptes à assurer leur immobilisation dans une position déterminée.

8. Dispositif suivant l'une quelconque des revendications précédentes, caractérisé en ce que l'organe obturateur (9) est fabriqué en un matériau choisi parmi le groupe comprenant : l'aluminium, la fonte, la résine, l'acier inoxydable et le métal recouvert de matériau polymère.

9. Dispositif suivant l'une quelconque des revendications précédentes, caractérisé en ce que la chambre centrale (8) comporte un hublot transparent apte à permettre le repérage visuel de la position de l'organe obturateur (9).

10. Dispositif suivant l'une quelconque des revendications précédentes, caractérisé en ce que chaque chambre secondaire (7) comporte une tubulure munie d'un moyen de fermeture, permettant le raccordement d'un appareil de mesure de pression.

11. Réseau de transport de fluide comportant un ou plusieurs tubes de transport de fluide (1) enfermés dans une enveloppe protectrice extérieure (2), l'espace compris entre le ou les tubes de transport de fluide et l'enveloppe étant sectionné en tronçons par des parois de séparation étanches (6), caractérisé en ce qu'il comporte des dispositifs de sectionnement automatiques (3), chacun de ces dispositifs comportant une chambre centrale (8) dans laquelle peut se déplacer un organe obturateur (9) qui, en l'absence de sollicitations extérieures, se positionne par gravité vers le centre de la chambre (8), deux conduits de pontage (4, 5) débouchant par une de leurs extrémités latéralement par des orifices d'entrée (11) à l'opposé l'un de l'autre dans la chambre centrale (8), l'autre extrémité de chacun de ces conduits étant montée sur ladite enveloppe protectrice extérieure (2) en débouchant respectivement dans deux tronçons voisins de part et d'autre d'une paroi de séparation étanche (6), l'orifice d'entrée (11) correspondant à chacun de ces conduits (4, 5) étant muni d'un siège (12) apte à coopérer avec l'organe obturateur (9) pour réaliser une fermeture hermétique, les dimensions relatives de la chambre centrale (8) et de l'organe obturateur (9) étant telles que lors de l'apparition d'une différence de pression entre les deux tronçons de l'enveloppe, le flux de fluide provenant du tronçon (16) où la pression est la plus élevée provoque le déplacement de l'organe obturateur (9) depuis le centre de la chambre (8), ledit organe obturateur (9) venant s'appliquer contre le siège (12) ménagé sur l'orifice (11) communiquant avec le tronçon (17) où la pression est la plus faible,
un orifice d'échappement (13) mettant en communication l'intérieur de la chambre centrale (8) et l'atmosphère extérieure, ledit orifice d'échappement (13) étant fermé en condition normale par un organe de protection contre la suppression (15)

12. Réseau suivant la revendication 11, caractérisé en ce qu'il comporte des pompes aptes à alimenter en série un certain nombre de tronçons reliés par leurs dispositifs de pontage à sectionnement automatique (3).

13. Réseau suivant l'une quelconque des revendications 11 et 12, caractérisé en ce que l'organe obturateur (9) des dispositifs à sectionnement automatique (3) a une forme sphérique.

14. Réseau suivant l'une quelconque des revendications 11, 12 et 13, caractérisé en ce que l'organe obturateur (9) des dispositifs de pontage à sectionnement automatique (3) repose sur le fond de leur chambre centrale (8), laquelle présente une concavité telle qu'en l'absence de sollicitations extérieures, l'organe obturateur (9) est ramené par gravité vers le centre de la chambre centrale (8).

15. Réseau suivant l'une quelconque des revendications 11, 12 et 13, caractérisé en ce que l'organe obturateur (9) des dispositifs de pontage à sectionnement automatique (3) est suspendu à la manière d'un pendule dans leur chambre centrale (8), de manière telle qu'en l'absence de sollicitations extérieures, il est ramené par gravité vers le centre de cette chambre (8).

16. Réseau suivant l'une quelconque des revendications 11 a 15, caractérisé en ce que l'organe de protection contre la surpression (15) des dispositifs de pontage à sectionnement automatique (3) est un disque de rupture.

17. Réseau suivant l'une quelconque des revendications 11 à 16, caractérisé en ce que les dispositifs de pontage à sectionnement automatique comportent un organe de manoeuvre extérieur, apte à déplacer et à maintenir dans une position prédéterminée l'organe obturateur (9).

18. Réseau suivant la revendication 17, caractérisé en ce que l'organe de manoeuvre extérieur des dispositifs de pontage à sectionnement automatique comprend deux tiges (18) débouchant dans des chambres secondaires (7) attenant à la chambre centrale (8), lesdites tiges de manoeuvre (18) pouvant être déplacées longitudinalement selon l'axe des orifices d'entrée (11) de la chambre centrale (8), des moyens d'étanchéité étant disposés entre lesdites tiges (18) et la paroi du dispositif, lesdites tiges (18) étant munies, en outre, de moyens de positionnement aptes à assurer leur immobilisation dans une position déterminée.

19. Réseau suivant l'une quelconque des revendications 11 à 18, caractérisé en ce que l'organe obturateur (9) des dispositifs de pontage à sectionnement automatique est fabriqué en un matériau choisi parmi le groupe comprenant : l'aluminium, la fonte, la résine, l'acier inoxydable et le métal recouvert de matériau polymère.

20. Réseau suivant l'une quelconque des revendications 11 à 19, caractérisé en ce que la chambre centrale (8) des dipositifs de pontage à sectionnement automatique comporte un hublot transparent, apte à permettre le repérage visuel de la position de l'organe obturateur (9).

21. Réseau suivant l'une quelconque des revendications 11 à 19, caractérisé en ce que chaque chambre secondaire (7) comporte une tubulure munie d'un moyen de fermeture, permettant le raccordement d'un appareil de mesure de pression.

## Claims

1. Automatic cut-off device (3) for fluid transporting network comprising one or more fluid transporting tubes (1) enclosed in an outer protecting envelope (2), the space included between the fluid transporting tube or tubes (1) and the said outer protecting envelope (2) being divided into segments (16, 17) separated by sealed separation walls (6), the said device comprising a central chamber (8) in which a stopper member (9) may move, and orifices (11), for inlet into this chamber (8), which are equipped with a seat (12) able to interact with the stopper member (9) so as to provide hermetic closing, this device being characterised in that it comprises
- two bridging pipes (4, 5) opening laterally at one of their ends, opposite one another, via the inlet orifices (11), into the central chamber (8), the other end of each of these bridging pipes (4, 5) being mounted on the said outer protecting envelope (2) and opening respectively into two neighbouring segments, on either side of a sealed separation wall (6),
- an escape orifice (13) which allows the inside of the central chamber (8) to communicate with the atmosphere outside, the said escape orifice (13) being closed under normal conditions by a member (15) for protecting against overpressure,
- the stopper member (9) being positioned by gravity towards the centre of the chamber (8) in the absence of external stresses,
- the relative dimensions of the central chamber (8) and of the stopper member (9) being such that when a pressure difference appears between the two pipes (4, 5), the flow of fluid coming from the pipe (4, 5) where the pressure is greater causes the stopper member (9) to move, the said stopper member (9) being pressed against the seat (12) of the orifice (11) communicating with the pipe (4, 5) where the pressure is lower.

2. Device according to Claim 1, characterised in that the stopper member (9) has a spherical shape.

3. Device according to either of Claims 1 and 2, characterised in that the stopper member (9) rests on the bottom of the central chamber (8), which chamber has a concavity such that, in the absence of external stresses, the stopper member (9) is brought by gravity towards the centre of the central chamber (8).

4. Device according to either of Claims 1 and 2, characterised in that the stopper member (9) is suspended, like a pendulum, in the central chamber (8), in such a manner that, in the absence of external stresses, it is brought by gravity towards the centre of this chamber (8).

5. Device according to any one of the preceding claims, characterised in that the member (15) for protecting against overpressure is a rupture disc.

6. Device according to any one of the preceding claims, characterised in that it comprises an external manoeuvring member able to move the stopper member (9) and to maintain it in a predetermined position.

7. Device according to Claim 6, characterised in that the external manoeuvring member comprises two rods (18) opening into secondary chambers (7) adjoining the central chamber (8), the said manoeuvring rods (18) being capable of being moved longitudinally along the axis of the orifices (11) for inlet into the central chamber (8), sealing means being arranged between the said rods (18) and the wall of the device (3), the said rods (18) being equipped, moreover, with positioning means able to immobilise them in a predetermined position.

8. Device according to any one of the preceding claims, characterised in that the stopper member (9) is manufactured from a material chosen from the group comprising: aluminium, cast iron, resin, stainless steel and metal covered with polymer material.

9. Device according to any one of the preceding claims, characterised in that the central chamber (8) comprises a transparent viewing hatch capable of allowing visual identification of the position of the stopper member (9).

10. Device according to any one of the preceding claims, characterised in that each secondary chamber (7) comprises a tube equipped with a closing means, allowing the connection of a pressure-measuring appliance.

11. Fluid transporting network comprising one or more fluid transporting tubes (1) enclosed in an outer protecting envelope (2), the space included between the fluid transporting tube or tubes and the envelope being cut off into segments by sealed separation walls (6), characterised in that it comprises automatic cut-off devices (3), each of these devices comprising a central chamber (8) in which a stopper member (9) can move which, in the absence of external stresses, is positioned by gravity towards the centre of the chamber (8), two bridging pipes (4, 5) opening laterally, via one of their ends, via inlet orifices (11) opposite one another, into the central chamber (8), the other end of each of these pipes being mounted on the said outer protecting envelope (2) and opening respectively in two neighbouring segments on either side of a sealed separation wall (6), the inlet orifice (11) corresponding to each of these pipes (4, 5) being equipped with a seat (12) able to interact with the stopper member (9) so as to provide hermetic closing, the relative dimensions of the central chamber (8) and of the stopper member (9) being such that when a pressure difference appears between the two segments of the envelope, the flow of fluid coming from the segment (16) where the pressure is higher causes the stopper member (9) to move from the centre of the chamber (8), the said stopper member (9) being pressed against the seat (12) made on the orifice (11) communicating with the segment (17) where the pressure is lower,
an escape orifice (13) which allows the inside of the central chamber (8) to communicate with the atmosphere outside, the said escape orifice (13) being closed under normal conditions by a member (15) for protecting against overpressure.

12. Network according to Claim 11, characterised in that it comprises pumps able to supply, in series, a certain number of segments connected by their bridging devices with automatic cut-off (3).

13. Network according to either of Claims 11 and 12, characterised in that the stopper member (9) of the automatic cut-off devices (3) has a spherical shape.

14. Network according to any one of Claims 11, 12, and 13, characterised in that the stopper member (9) of the bridging devices with automatic cut-off (3) rests on the bottom of their central chamber (8), which central chamber has a concavity such that, in the absence of external stresses, the stopper member (9) is returned by gravity towards the centre of the central chamber (8).

15. Network according to any one of Claims 11, 12 and 13, characterised in that the stopper member (9) of the bridging devices with automatic cut-off (3) is suspended like a pendulum in their central chamber (8), in such a manner that, in the absence of external stresses, it is returned by gravity towards the centre of this chamber (8).

16. Network according to any one of Claims 11 to 15, characterised in that the member for protecting against overpressure (15) of the bridging devices with automatic cut-off (3) is a rupture disc.

17. Network according to any one of Claims 11 to 16, characterised in that the bridging devices with automatic cut-off comprise an external manoeuvring member able to move the stopper member (9) and to maintain it in a predetermined position.

18. Network according to Claim 17, characterised in that the external manoeuvring member of the bridging devices with automatic cut-off comprises two rods (18) opening into secondary chambers (7) adjoining the central chamber (8), the said manoeuvring rods (18) being capable of being moved longitudinally along the axis of the orifices (11) for inlet into the central chamber (8), sealing means being arranged between the said rods (18) and the wall of the device, the said rods (18) being equipped, moreover, with positioning means able to immobilise them in a predetermined position.

19. Network according to any one of Claims 11 to 18, characterised in that the stopper member (9) of the bridging devices with automatic cut-off is manufactured from a material chosen from the group comprising: aluminium, cast iron, resin, stainless steel and metal covered with polymer material.

20. Network according to any one of Claims 11 to 19, characterised in that the central chamber (8) of the bridging devices with automatic cut-off comprises a transparent viewing hatch, able to allow visual identification of the position of the stopper member (9).

21. Network according to any one of Claims 11 to 19, characterised in that each secondary chamber (7) comprises a tube equipped with a closing means, allowing the connection of a pressure-measuring appliance.

## Patentansprüche

1. Vorrichtung (3) zum automatischen Zerlegen bzw. Unterteilen für ein Fluidtransportnetz, mit einem oder mehreren Fluidtransportrohren (1), die in einer äußeren Schutzhülle (2) eingeschlossen sind, wobei der Raum zwischen dem oder den Fluidtransportrohren (1) und der äußeren Schutzhülle (2) in Stücke (16, 17) aufgeteilt ist, die durch dichte Trennwände (6) voneinander getrennt sind, wobei die Vorrichtung eine Mittenkammer (8) aufweist, in der sich ein Schließorgan (9) bewegen kann, und Eingangsöffnungen (11) in diese Kammer (8) mit einem Sitz (12) versehen sind, der geeignet ist, mit dem Schließorgan (9) zusammenzuwirken, um ein hermetisches Schließen zu erzeugen, wobei die Vorrichtung dadurch gekennzeichnet ist, daß sie aufweist
- zwei Brückenleitungen (4, 5), die an einem ihrer Enden seitlich, das eine gegenüberliegend dem anderen, durch die Eintrittsöffnungen (11) in die Mittenkammer (8) münden, wobei das andere Ende einer jeden der Brückenleitungen (4, 5) auf der äußeren Schutzhülle (2) angebracht ist, unter Einmündung entsprechend in zwei benachbarte Stücke, beiderseits einer dichten Trennwand (6),
- eine Austrittsöffnung (13), die das Innere der Mittenkammer (8) in Verbindung mit der äußeren Umgebung setzt, wobei die Austrittsöffnung (13) unter normalen Bedingungen durch ein Schutzorgan gegen den Überdruck (15) geschlossen ist,
- wobei das Schließorgan (9) sich mittels Schwerkraft zu dem Zentrum der Kammer (8) unter Nichtvorhandensein von äußeren Beanspruchungen bzw. Belastungen plaziert,
- wobei die relativen Abmessungen der Mittenkammer (8) und des Schließorgans (9) derart sind, daß beim Auftreten einer Druckdifferenz zwischen den beiden Leitungen (4, 5) der Fluidfluß, der von der Leitung (4, 5) herrührt, wo der Druck am höchsten ist, die Bewegung des Schließorgans (9) hervorruft, wobei das Schließorgan (9) gegen den Sitz (12) der Öffnung (11) in Anlage kommt, die mit der Leitung (4, 5) in Verbindung steht, wo der Druck am niedrigsten ist.

2. Vorrichtung nach Anspruch 1, dadurch gekennzeichnet, daß das Schließorgan (9) eine Kugelform aufweist.

3. Vorrichtung nach Anspruch 1 oder 2, dadurch gekennzeichnet, daß das Schließorgan (9) auf dem Boden der Mittenkammer (8) ruht, die eine derartige Konkavität aufweist, daß bei Nichtvorhandensein von äußeren Beanspruchungen das Schließorgan (9) mittels Schwerkraft zum Zentrum der Mittenkammer (8) gebracht wird.

4. Vorrichtung nach Anspruch 1 oder 2, dadurch gekennzeichnet, daß das Schließorgan (9) wie ein Pendel in der Mittenkammer (8) aufgehängt ist, derart, daß bei Nichtvorhandensein von äußeren Belastungen es mittels Schwerkraft zum Zentrum dieser Kammer (8) gebracht wird.

5. Vorrichtung nach einem der vorhergehenden Ansprüche, dadurch gekennzeichnet, daß das Schutzorgan gegen den Überdruck (15) eine Reißscheibe ist.

6. Vorrichtung nach einem der vorhergehenden Ansprüche, dadurch gekennzeichnet, daß sie ein äußeres Handhabungsorgan aufweist, das geeignet ist, das Schließorgan (9) zu bewegen und es in einer vorbestimmten Position zu halten.

7. Vorrichtung nach Anspruch 6, dadurch gekennzeichnet, daß das äußere Handhabungsorgan zwei Stangen (18) aufweist, die in zweite Kammern (7) münden, die an die Mittenkammer (8) angrenzen, wobei die genannten Handhabungsstangen (18) längs entlang der Achse der Eintrittsöffnungen (11) der Mittenkammer (8) bewegt werden können, wobei Dichtungseinrichtungen zwischen den genannten Stangen (18) und der Seitenwand der Vorrichtung (3) angeordnet sind, wobei die genannten Stangen (18) weiterhin mit Einrichtungen zum Positionieren versehen sind, die geeignet sind, deren Unbeweglichkeit in einer vorbestimmten Position sicherzustellen.

8. Vorrichtung nach einem der vorhergehenden Ansprüche, dadurch gekennzeichnet, daß das Schließorgan (9) aus einem Material hergestellt ist, ausgewählt aus der Gruppe Aluminium, Gußeisen, Harz, nichtrostendem Stahl und Metall, das mit Polymermaterial beschichtet ist.

9. Vorrichtung nach einem der vorhergehenden Ansprüche, dadurch gekennzeichnet, daß die Mittenkammer (8) ein durchsichtiges Fenster aufweist, das geeignet ist, das visuelle Erkennen der Stellung des Schließorgans (9) zu ermöglichen.

10. Vorrichtung nach einem der vorhergehenden Ansprüche, dadurch gekennzeichnet, daß jede zweite Kammer (7) einen Rohrstutzen aufweist, der mit einer Schließeinrichtung versehen ist, die den Anschluß eines Druckmeßgerätes erlaubt.

11. Fluidtransportnetz mit einem oder mehreren Fluidtransportrohren (1), die in einer äußeren Schutzhülle (2) eingeschlossen sind, wobei der Raum zwischen dem oder den Fluidtransportrohren und der Hülle durch dichte Trennwände (6) in Abschnitte unterteilt ist, dadurch gekennzeichnet, daß es automatische Unterteilungsvorrichtungen (3) aufweist, wobei jede dieser Vorrichtungen eine Mittenkammer (8) aufweist, in der sich ein Schließorgan (9) bewegen kann, das bei Nichtvorhandensein von äußeren Belastungen bzw. Beanspruchungen, sich durch Schwerkraft zu dem Zentrum der Kammer (8) hin positioniert, wobei zwei Brückenleitungen (4, 5) durch eines ihrer Enden seitlich durch Eintrittsöffnungen (11), die einander entgegengesetzt liegen, in die Mittenkammer (8) münden, und das andere Ende einer jeden dieser Leitungen an der äußeren Schutzhülle (2) angebracht ist, unter entsprechendem Münden in zwei benachbarte Teilstücke beiderseits einer dichten Trennwand (6), wobei die einer jeden dieser Leitungen (4, 5) entsprechende Eintrittsöffnung (11) mit einem Sitz (12) versehen ist, der geeignet ist, mit dem Schließorgan (9) zusammenzuwirken, um ein hermetisches Schließen zu erzeugen, wobei die relativen Abmessungen der Mittenkammer (8) und des Schließorgans (9) derart sind, daß beim Auftreten einer Druckdifferenz zwischen den beiden Teilstücken der Hülle der Fluidstrom, der von dem Teil (16) herrührt, wo der Druck am höchsten ist, die Bewegung des Schließorgans (9) von dem Zentrum der Kammer (8) hervorruft, wobei das Schließorgan (9) in Anlage gegen den Sitz (12) kommt, der an der Öffnung (11) ausgebildet ist, die mit dem Teilstück (17) in Verbindung steht, wo der Druck am geringsten ist,
wobei eine Austrittsöffnung (13) das Innere der Mittenkammer (8) mit der Umgebungsatmosphäre in Verbindung setzt, wobei die Austrittsöffnung (13) unter normalen Bedingungen durch ein Schutzorgan gegen den Überdruck (15) geschlossen ist.

12. Netz nach Anspruch 11, dadurch gekennzeichnet, daß es Pumpen aufweist, die geeignet sind, hintereinander eine gewisse Anzahl von Teilstücken zu speisen, die durch ihre Brückenvorrichtungen mit automatischer Unterteilung (3) verbunden sind.

13. Netz nach Anspruch 11 oder 12, dadurch gekennzeichnet, daß das Schließorgan (9) der Vorrichtungen zum automatischen Unterteilen (3) eine Kugelform aufweist.

14. Netz nach einem der Ansprüche 11, 12 oder 13, dadurch gekennzeichnet, daß das Schließorgan (9) der Brückenvorrichtungen mit automatischer Unterteilung (3) auf dem Boden ihrer Mittenkammer (8) ruht, die eine Wölbung aufweist, derart, daß bei Nichtvorhandensein von äußeren Belastungen bzw. Beanspruchungen das Schließorgan (9) mittels Schwerkraft zum Zentrum der Mittenkammer (8) zurückgebracht wird.

15. Netz nach einem der Ansprüche 11, 12 oder 13, dadurch gekennzeichnet, daß das Schließorgan (9) der Brückenvorrichtungen mit automatischer Unterteilung (3) wie ein Pendel in deren Mittenkammer (8) aufgehängt ist, derart, das bei Nichtvorhandensein von äußeren Beanspruchungen oder Belastungen es mittels Schwerkraft zum Zentrum dieser Kammer (8) zurückgebracht wird.

16. Netz nach einem der Ansprüche 11 bis 15, dadurch gekennzeichnet, daß das Schutzorgan gegen den Überdruck (15) der Brückenvorrichtungen mit automatischer Unterteilung (3) eine Reißscheibe ist.

17. Netz nach einem der Ansprüche 11 bis 16, dadurch gekennzeichnet, daß die Brückenvorrichtungen mit automatischer Unterteilung ein äußeres Handhabungsorgan aufweisen, das geeignet ist, das Schließorgan (9) zu bewegen und es in einer vorbestimmten Stellung zu halten.

18. Netz nach Anspruch 17, dadurch gekennzeichnet, daß das äußere Handhabungsorgan der Brückenvorrichtungen mit automatischer Unterteilung zwei Stangen (18) aufweist, die in zweite Kammern (7) münden, die an die Mittenkammer (8) angrenzen, wobei die Handhabungsstangen (18) längs entlang der Achse der Eintrittsöffnungen (11) der Mittenkammer (8) bewegt werden können, wobei Dichtungseinrichtungen zwischen den Stangen (18) und der Seitenwand dieser Vorrichtung angeordnet sind, wobei die Stangen (18) weiterhin mit Positionierungseinrichtungen versehen sind, die geeignet sind, ihre Unbeweglichkeit in einer vorbestimmten Stellung sicherzustellen.

19. Netz nach einem der Ansprüche 11 bis 18, dadurch gekennzeichnet, daß das Schließorgan (9) der Brückenvorrichtungen mit automatischer Unterteilung hergestellt wird aus einem Material ausgewählt aus der Gruppe Aluminium, Gußeisen, Harz, nichtrostendem Stahl und mit einem Polymermaterial beschichtetem Metall.

20. Netz nach einem der Ansprüche 11 bis 19, dadurch gekennzeichnet, daß die Mittenkammer (8) der Brückenvorrichtungen mit automatischer Unterteilung ein durchsichtiges Fenster aufweist, das geeignet ist, das visuelle Erkennen der Stellung des Schließorgans (9) zu ermöglichen.

21. Netz nach einem der Ansprüche 11 bis 19, dadurch gekennzeichnet, daß jede zweite Kammer (7) ein Rohrstück aufweist, das mit einer Schließeinrichtung versehen ist, die das Anbringen eines Druckmeßgerätes erlaubt.
